# EUROPEAN PATENT APPLICATION

(11) **EP 1 394 976 A1**
(43) Date of publication of application: **03.03.2004**
(21) Application number: 02360248.5
(22) Date of filing: 30.08.2002
(51) Int. Cl.: H04J 14/02

(54) **Channel power control method in WDM system**

(71) Applicant: ALCATEL, 75008 Paris (FR)
(72) Inventor: Balland, Guy, 91700 Ste Genevieve des Bois (FR); Michaud, Alice, 75013 Paris (FR)
(74) Representative: Brose, Gerhard, Dipl.-Ing.

(57) **Abstract**

It is described a WDM optical communication method based on the use of a plurality of wavelength specific channels defining a spectrum for the transmission of optical signals through an optical communication network. These optical signals will be coupled at a sender side into a common optical fiber of said network, to be amplified by optical amplifiers along said network. The power of optical signals per channel will be tuned at said sender side to build an uniform-flat - spectrum throughout said optical communication network.

## Description

### Technical field of the invention:

The present invention relates to a Wavelength Division Multiplexing WDM optical communication method based on the use of a plurality of wavelength specific channels defining a spectrum for the transmission of optical signals through an optical communication network while said optical signals will have to be coupled at a sender side into a common optical fiber of said network, to be amplified by amplifiers along said network. Furthermore, the invention relates to a WDM optical communication apparatus comprising transmitters and at least a multiplexer for coupling into a common optical fiber of an optical communication network optical signals to be generated by said transmitters over a plurality of wavelength specific channels.

### Background of the invention:

Optical Amplifiers have been used in optical communication networks based on WDM since a long time. It is well-known that Optical Amplifiers (OA) have not a uniform spectral gain response, which means that some optical signals at specific wavelength are receiving more gain when going through the amplifier than others. When cascading these non uniformity into an optical communication network, some channels will be significantly penalized and performance of the optical amplifier (amplifier spacing) will have to be reduced to insure proper service quality for detrimental channels. This turn into additional cost for the optical communication network.

Different solutions exist to avoid non-linearity in the fiber, including: i) Raman amplification at each amplifier stage (improve equivalent optical amplifier noise figure); ii) Use of large effective area fibers such TERALIGHT™, LEAF™ or TRUE-WAVE™ with moderate chromatic dispersion in the transmission range. Use of Roman amplification increase the cost and complexity of amplifiers hence the system cost/km/Gbit can become prohibitive. Selection of fiber is possible for new installed fibers, however, since in most cases the fiber and cable has been installed already, it is not possible to select optimum fiber

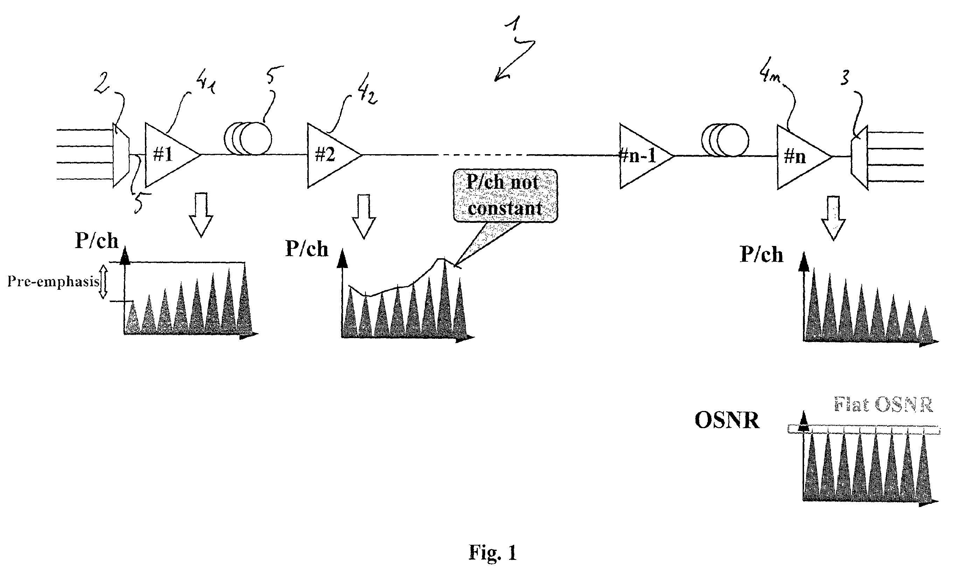

Different techniques have been used to obtain a good wavelength gain uniformity, including use of gain flattening filters, changing doping profile or host material for the common optical fiber. Gain uniformity can be optimized as low as 1 dB in the range from 1530-1560 nm at nominal input power. However, even if gain can be flattened, the noise figure of optical amplifier is not homogeneous with respect to the wavelength dependency of transmitted optical signals. Hence, after a long chain of optical amplifiers, noise will accumulate in some part of the spectrum, and transmitted power of channels in this wavelength range will need to be reinforced versus channels transmitted in other part of the spectrum. This well-known power per channel adjustment process is called "pre-emphasis" (US5,225,922; US5,790,289). It consists to adjust the local transmitted input power of each channels by emphasizing few of them in order to achieve an uniform Optical to Noise Ratio (OSNR) at the far end receivers between all channels (Fig 1). However, significant power per channel (P/ch) differences can be seen along the line, especially at each optical amplifier output. These differences are a limitation especially with regard to non-linearity in the fiber. Beyond a given power threshold in the fiber, the penalty on the received side increased rapidly with increasing P/ch. Pre-emphasis is also a complex algorithm to be managed in a system. It is based on OSNR values measured at the far end terminal which must be processed to adjust the optical input signal power. Such algorithm is particularly adapted for point to point connection i.e. in trunk or linear optical connection.

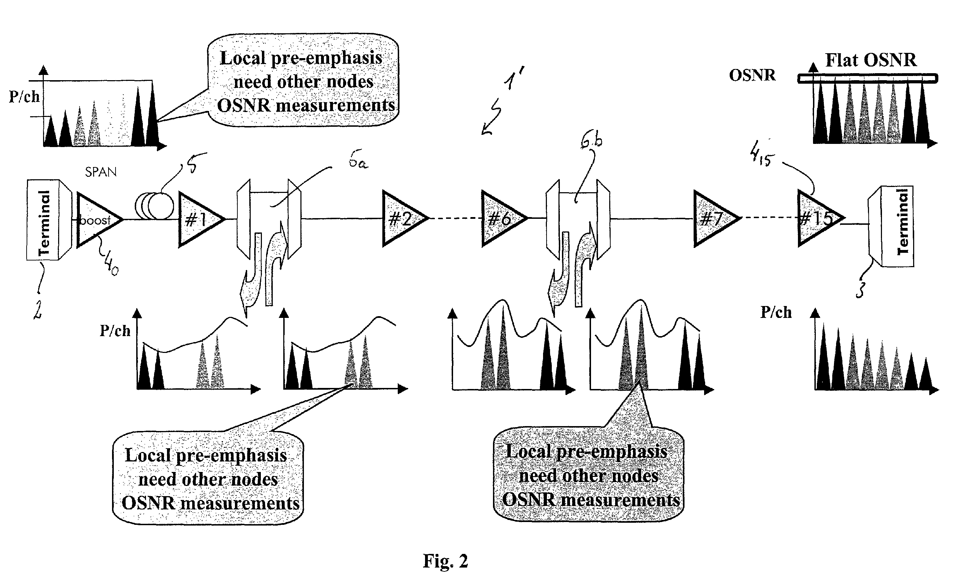

Pre-emphasis is not that advantageous for metropolitan networks build following a ring or meshed architecture with a plurality of nodes. Indeed, further complexity need to be accounted for when optical Add-Drop Multiplexer are used at a node of that network since in this case pre-emphasis is required at each add-drop node. It implies to manage all the different measures of OSNR not only at the far end but at all different nodes and to make all that measures available. The add of optical signals in a channel at a node will have to be performed at a power defined by the power of optical signals dropped in this channel at the same node (see Fig. 2).This requires a much heavier algorithm - converging one where longest optical connections channels are pre-emphasized before shortest are processed - which will imply high cost for an optical communication network with a plurality of add-drop nodes.

Furthermore, pre-emphasis management in WDM system is complex and costly because it requires adjustable optical attenuators for each WDM transmitter (and receivers). Upgrade when adding transported channels may requires that pre-emphasis for all channels is calculated again with in some cases traffic interruption or degradations on running traffic during the upgrade.

### Summary of the invention:

It is an object of the present invention to control the channel power in WDM system to limit non-linearity effects in chain of Optical Amplifiers and to drastically simplify management of such WDM system.

According to a first aspect of this invention, this object is attained by applying a method for an optical communication network in which the power of optical signals per channel at the sender side i.e. near end terminal will be tuned to build an uniform spectrum throughout said optical network. Advantageously, the power of optical signals per channel will be kept constant at specific points of said optical communication network to a power reference value for the whole used spectrum. In such a way, it will be much easier to add new optical signals at an add-drop node where before optical signals were dropped. In the case of already predefined value of said power reference, it will be possible to add said optical signals simply at said power reference. In such a way, no information neither of the drop optical signals nor of the situation at the far end terminal will be needed.

According to a second aspect of the present invention, a WDM optical communication apparatus comprising transmitters will be used such that said transmitters are setup to generate the optical signals to be coupled into a common optical fiber of the network at a same power over said plurality of wavelength specific channels. Due to the uniform spectrum the amplifiers throughout the network will work in an optimized way for all channels when the respective pump of the amplifier will perform in an independent way any required adaptation. No remote information will be used for that.

Further advantageous features of the invention are defined in the dependent claims and will become apparent from the following description and the drawings.

### Brief description of the drawings:

An embodiment of the invention will now be explained in more details with reference to the accompanying drawings, in which:
Fig. 1 is a schematic view of a point to point network according to state of the art;
Fig. 2 is a schematic view of an optical communication network managed using state of the art pre-emphasizing;
Fig. 3 is a schematic view of an optical communication network applying method according to present invention;
Fig. 4 is a schematic view of an optical communication network with nodes applying method according to the present invention;
Fig. 5 is a comparison of power spectrum using state of the art pre-emphasizing and method according to the present invention;
Fig. 6 is a comparison of the different penalties according to the power per channel between state of the art and present invention.

### Detailed description of preferred embodiments:

On figure 1 is described a state of the art optical point to point (or line) network. It comprises at its near end terminal a multiplexer 2 for coupling all the optical signals spread over different wavelength channels into a common optical fiber 5 of said network and a demultiplexer 3 at its far end terminal. The optical signals will be launched applying pre-emphasizing method for the power per channel P/ch. The network comprises amplifiers 4₁ to 4ₙ regularly spaced and used to amplify the optical signals when transmitted through that network. The spectrum of the different channels is strongly inhomogeneous already after the second amplifier 4₂. If the pre-emphasizing is chosen correctly at the near end terminal, the optical signal to noise ratio OSNR will be homogenous i.e. flat at the far end terminal.

But this is absolutely unsuitable for an optical communication network 1' comprising add-drop nodes 6a, 6b as shown on figure 2. It will be very difficult to apply a satisfactory add-drop mechanism at a node 6a, 6b when the optical signals are launched at the near end terminal 2 with a pre-emphasized spectrum to obtain at the far end terminal 3 flat OSNR. Indeed, as discussed above, the pre-emphasizing must be maintained. This implies to have all the OSNR measurements at each nodes and at the far end terminal 3 to be able to adapt the power of the optical signals to be added in a specific channel at said node 6a, 6b.

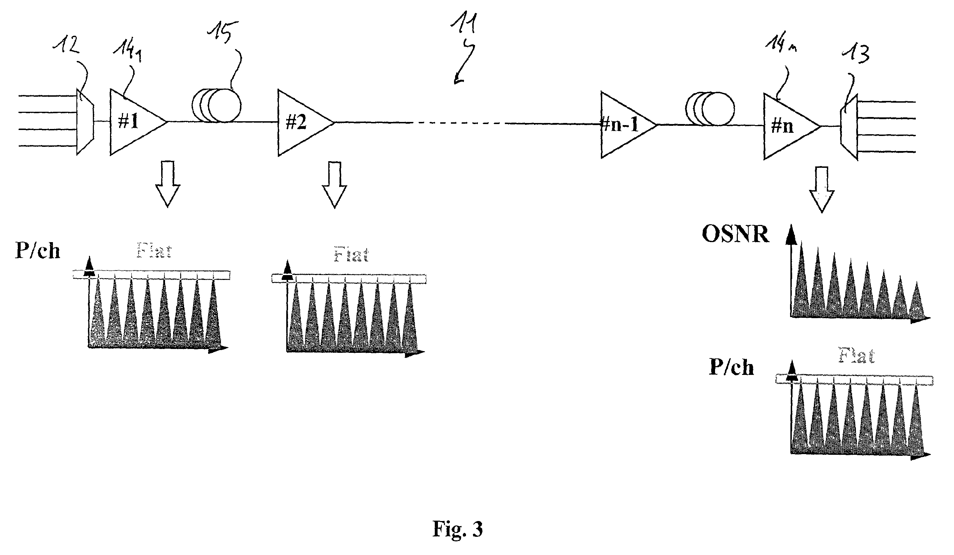

On figure 3 is shown an optical communication network 11 driven following the method according to the present invention. The optical communication network 11 comprises a multiplexer at its near end terminal 12 and a demultiplexer 13 at its far end terminal. In between are placed regularly on the optical fiber 15 a plurality of optical amplifiers 14₁ till 14ₙ. The WDM optical communication method according to the present invention is based on the use of a plurality of wavelength specific channels defining the spectrum for the transmission of optical signals through said network 11. All the optical signals will have to be coupled at a sender side into the common fiber 15 of that network 1, to be amplified by optical amplifiers 14₁ till 14ₙ along said network 11. The power of the optical signals per channel will be tuned at said sender side to build an uniform spectrum throughout said optical communication network 11. Furthermore, said power of the optical signals per channels will be kept constant to a power reference value for the whole spectrum. This will be performed more particularly at specific points of said optical communication network like at the input or output of said amplifiers 14₁ to 14ₙ.

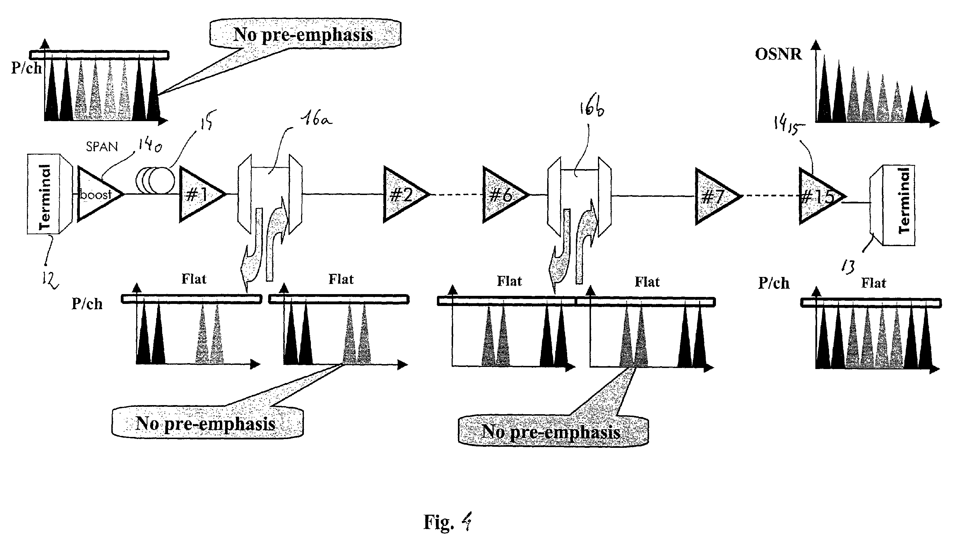

This power reference value can be defined independently of a later state of said optical communication network. It may be the result of some tests with some optimization. The knowledge of that power reference value allows then an add-drop mechanism along said optical communication network without the information of the OSNR at the different nodes. On figure 4 is shown such situation of an optical communication network with several add-drop nodes 16a, 16b. It is a typical situation for a metropolitan network with a ring or meshed architecture. All the optical signals will be launched in different channels at the near end terminal 12 and coupled into the common optical fiber 15 of said network. The power of the different channels will be tuned to give an uniform spectrum i.e. no pre-emphasizing will be applied. The drop of optical signals at a node 16a will be easier due to the control of the power of its corresponding channel. It will always be at the same power to the receiver avoiding automatic received power adjustment into the dynamic range of the receiver. The same argument applies for the add of optical signals into common fiber 15 at a node 16a. Since no pre-emphasizing will be applied, the optical signals will be tuned by the respective pump at the reference power level usually predefined.

According to the present invention, the transmitters of the used WDM optical communication apparatus for coupling into said common optical fiber all the optical signals are setup to generate said optical signals at a same power over said plurality of wavelength specific channels. This is performed without any information of far end terminal.

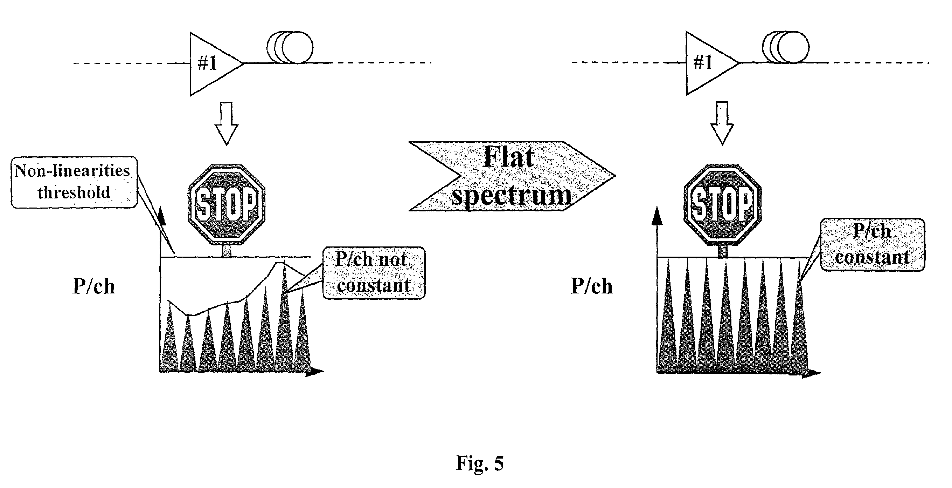

On figure 5 is shown a more detailed comparison of the power spectrum after an amplifier of the network when using state of the art pre-emphasizing and when applying an uniform - flat - spectrum according to the invention. It is clear that when using pre-emphasizing, the differences even between neighbor channel may be big. In contrary, using an uniform spectrum implies that all channels will then propagate with same P/ch at the amplifier output. This allows an accurate control of non-linearities and associated penalties on the end to end performances for a network working according to the present invention. This tight P/ch control allows to improve the system performances by increasing amplifiers output power. It is even possible to chose the power reference in some particular case possibly depending on the used channels to be close to the non-linear threshold. And this improvement will be obtained without being penalized by adverse effects of non-linearities.

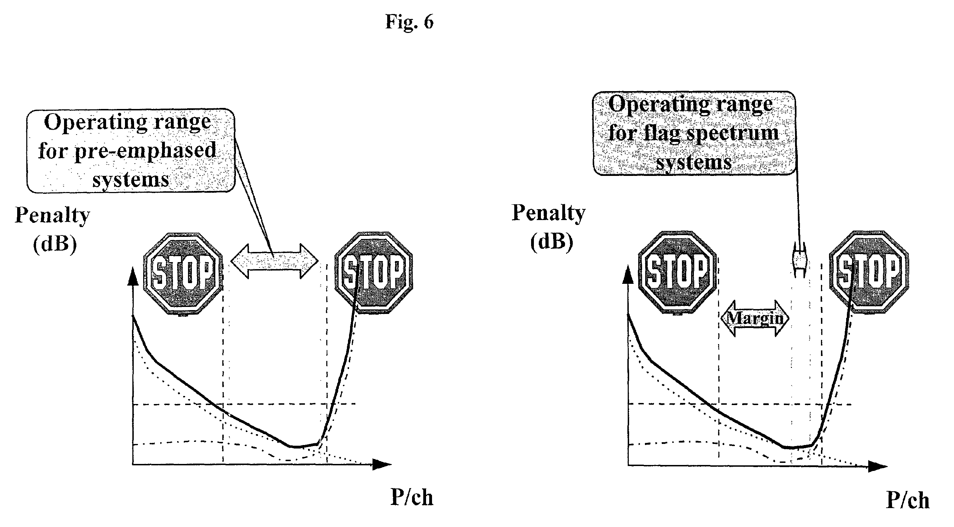

On figure 6 is shown the different penalties per channel in dotted, in dashed-dotted and in full lines respectively for the penalty due to the non-linear effects, due to the noise coming from the amplifier and the combination of both. When a uniform spectrum is used instead of pre-emphasizing then the operating range will be significantly reduced. This has the advantage to release some margin which can be advantageously used for further transmission of optical signals.

## Claims

1. A WDM optical communication method based on the use of a plurality of wavelength specific channels defining a spectrum for the transmission of optical signals through an optical communication network while said optical signals will have to be coupled at a sender side into a common optical fiber of said network, to be amplified by optical amplifiers along said network **characterized in, that** the power of optical signals per channel will be tuned at said sender side to build an uniform spectrum throughout said optical communication network.

2. WDM optical communication method according to claim 1, **characterized in, that** said power of optical signals per channel will be kept constant at specific points of said optical communication network to a power reference value for the whole used spectrum.

3. WDM optical communication method according to claim 2, **characterized in, that** said specific points of said optical communication network being chosen to be said optical amplifiers input or output.

4. WDM optical communication method according to claim 2, **characterized in, that** said power reference value will be predefined independently of a later state of said optical communication network.

5. WDM optical communication method according to claim 2, **characterized in, that** optical signals will be launched at said reference power value when to be added into said common optical fiber at a node of said optical communication network possibly being at one of said specific points.

6. A WDM optical communication apparatus comprising transmitters and at least a multiplexer for coupling into a common optical fiber of an optical communication network optical signals to be generated by said transmitters over a plurality of wavelength specific channels **characterized in, that** said transmitters are setup to generate said optical signals at a same power over said plurality of wavelength specific channels.
